# EUROPEAN PATENT APPLICATION

(11) **EP 1 595 818 A1**
(43) Date of publication of application: **16.11.2005**
(21) Application number: 04705897.9
(22) Date of filing: 28.01.2004
(51) Int. Cl.: B65D 81/18, B65D 81/38, B65D 81/07, F25D 3/00

(54) **STORAGE BOX**

(30) Priority: 31.01.2003 JP 2003023043
(71) Applicant: Ashimori Industry Co., Ltd., Osaka-shi, Osaka 550-0014 (JP)
(72) Inventor: KITA, Katsuo, Osaka 5660053 (JP)
(74) Representative: Müller, Gerald Christian
(86) International application number: PCT/JP2004/000763
(87) International publication number: WO 2004/067405

(57) **Abstract**

A storage box of the present invention has a container main body 2 and a lid 3. At least three adjacent surfaces of the side surface parts of the container main body 2 are formed by a woven fabric cloth 8 including two woven fabrics 6 facing at an interval and a large number of intermediate threads 7 distributively arranged and coupling the woven fabrics. Thereby, the storage box has sufficient shape retainability and is excellent in storage performance.

## Description

### Technical field

The present invention relates to a foldable storage box used for transporting commodities such as food.

### Background Art

A convenience store and a supermarket or the like handle multi-item foods, such as confectioneries including ice cream and chocolate, frozen foods, chilled foods and packed lunches. Commodities such as foods are contained in a storage box such as a cold insulation box or a heat insulation box so as to maintain quality, and are transported to each store by a truck such as a dry van.

For example, as described in Japanese Published Unexamined Patent Application No. 2002-302163, storage boxes made of styrene foam are used inmany applications. Japanese Published Unexamined Patent Application No. H10-287372 discloses a foldable assembled cold insulation box obtained by combining foam and an insulation sheet. Further, Japanese Published Unexamined Patent Application No. 2002-2828 discloses a foldable cold insulation box formed in such a manner that a cushioning sheet having a large number of air enclosed chambers is pasted on and covered with an aluminum foil.

While, for example, the storage box made of styrene foam, described in Japanese Published Unexamined Patent Application No. 2002-302163 is excellent in shape retainability, and loading such as stacking in the truck is possible, such a problem exists that the storage box occupies the same capacity as the time of use even when the storage box is not used for transporting commodities, and the space in the truck cannot be efficiently used. In that respect, the storage boxes described in Japanese Published Unexamined Patent Application Nos. H10-287372 and 2002-2828 can be folded when the storage boxes are not used for transporting the commodities. Thereby the storage boxes are excellent in storage performance, and the effective volume in the truck can be efficiently used. However, those storage boxes do not have sufficient rigidity for loading such as stacking in the truck at the time of transporting in the same manner as the above storage box made of styrene foam, and the effective volume in the truck at the time of transporting cannot be efficiently used.

The number of articles of the commodities to be transported has increased with the recent increase of convenience stores and the like, and the improvement in the transport efficiency of the commodities is desired. Therefore, the market desires a storage box which excels in shape retainability, has sufficient rigidity for loading such as stacking at the time of transporting, and excels in storage performance so that the storage box can be folded when the storage box is not used.

A large-sized storage box excellent in both shape retainability and storage performance is desired at the time of transporting a large number of commodities at once by freight car or aircraft or the like other than vehicles such as trucks.

It is also an object of the present invention to provide a storage box excellent in shape retainability and storage performance.

### Disclosure of the Invention

A storage box of the present invention comprises a container main body and a lid, wherein at least three adjacent surfaces of side surface parts of the container main body are formed by a woven fabric cloth including two woven fabrics facing at an interval and a large number of intermediate threads distributively arranged and coupling the woven fabrics.

According to the above constitution, when the woven fabrics are expanded by introducing air into the woven fabrics, the intermediate thread restrains the expansion of the woven fabrics facing one another, and thereby the container main body comes to have a high rigidity. When the storage box is not used, the storage box can be folded by releasing air. The effective volume in a truck can be efficiently used as well as allowing the storage box to be stored in a small space when the storage box is dropped off from the truck and stored at the time of not using the storage box. The storage box in which air is discharged becomes extremely lightweight, and the storage box can be easily carried. Herein, in order that the storage box has sufficient shape retainability, the entirety of container main body and lid do not need to be formed by the woven fabric cloth, and at least adjacent three side surface parts of the side surface parts may be formed by the woven fabric cloth.

Herein, the storage box may be provided with a cover member for covering the entire surface of the container main body and lid. According to the above constitution, the woven fabric cloth forming the side surface parts of the storage box is unexposed to the outside. The woven fabric cloth is not damaged while transporting the commodities, and internal air does not leak. The heat retaining property and cold retaining property at the time of transporting the commodities requiring cold insulation or heat insulation are also improved by the cover member.

A storage box of the present invention comprises a sheet-shaped container main body, a lid, and a woven fabric cloth including two woven fabrics facing at an interval and a large number of intermediate threads distributively arranged, and coupling the woven fabrics, arranged inside of the sheet-shaped container main body and lid, and forming at least three adjacent surfaces of the side surface parts of the container main body.

According to the above constitution, when the air is introduced into the woven fabrics and the woven fabrics are expanded, the expansion of the woven fabrics facing one another is restrained by the intermediate thread, and thereby the woven fabrics come to have high rigidity. When the storage box is not used, the storage box can be folded by releasing air. The effective volume in a truck can be efficiently used, and the storage box can be made extremely lightweight. Since the woven fabric cloth is arranged inside the sheet-shaped main part and lid, the woven fabric cloth is unexposed to the outside. The woven fabric cloth is not damaged while transporting the commodities, and internal air does not leak.

Herein, at least three adjacent surfaces of the side surface parts formed by the woven fabric cloth may be communicated with one another. According to the above constitution, the rigidity of the container main body is improved by introducing the air into the container main body, and the container main body can be made to obtain sufficient endurance even if the storage box is loaded. The injection work of the air can be easily performed.

A seal member may be provided at the circumferential part of the container main body. According to the above constitution, the sealability at the time of capping is improved and the heat retaining property in the container is improved.

An abrasion resistant material for preventing the abrasion of a bottom surface may be attachably/detachably provided. According to the above constitution, the bottom surface of the storage box can be prevented from being damaged by abrasion, particularly when heavy commodities are transported. When the abrasion resistant material is worn out, the worn out abrasion resistant material can also be replaced with a new abrasion resistant material.

### Brief Description of the Drawings

FIG. 1 is a schematic view of a storage box according to the first embodiment of the present invention.
FIG. 2 is a schematic view showing a state where a lid of the storage box according to the first embodiment is closed.
FIG. 3 shows the partial section of the storage box according to the first embodiment.
FIG. 4 is a schematic view of a storage box according to the second embodiment of the present invention.
FIG. 5 is a schematic view of a storage box according to the third embodiment of the present invention.
FIG. 6 is a schematic view of a storage box according to the fourth embodiment of the present invention.
FIG. 7 is a bottom view of the storage box according to the fourth embodiment.
FIG. 8 is another bottom view of the storage box according to the fourth embodiment.
FIG. 9 is a schematic view of a storage box according to the fifth embodiment of the present invention.

### Best Mode for Transporting Out the Invention

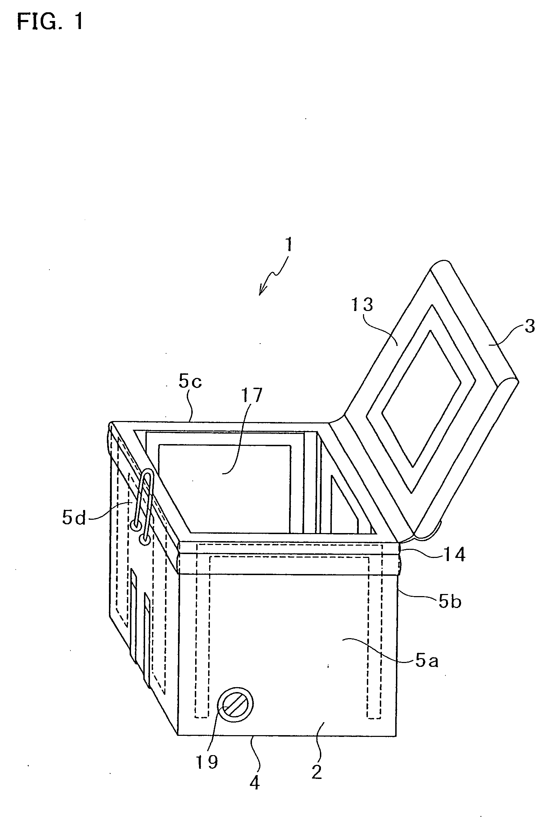

Hereinafter, the first embodiment of the present invention is described with reference to FIGs. 1 to 3.

In FIG. 1, a storage box 1 according to the example of the embodiment is particularly suitable for transporting commodities such as foods which are in a cold or heat insulation state. The storage box 1 is composed by a container main body 2 and a lid 3. The five surfaces of a bottom surface part 4 and side surface parts 5a, 5b, 5c and 5d are communicated with one another, and the container main body 2 is integrally formed.

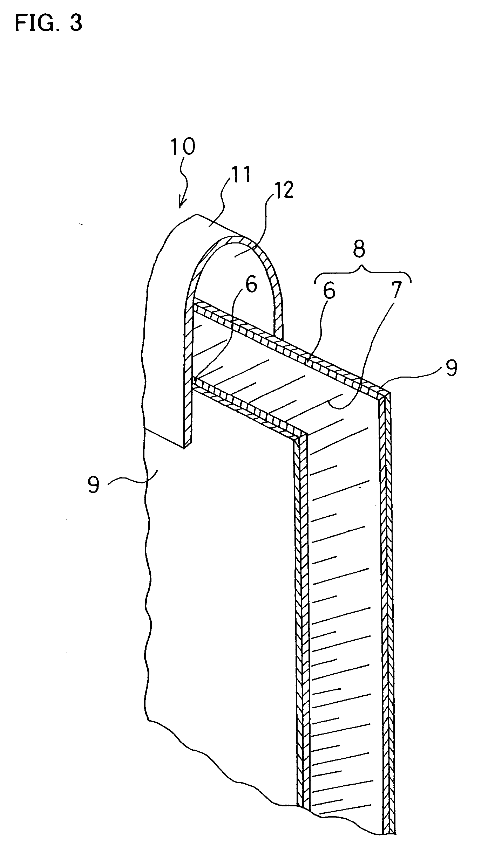

As shown in the partial sectional view of the side surface part 5 of the container main body 2 of FIG. 3, the container main body 2 and the lid 3 are composed by a woven fabric cloth 8 including two woven fabrics 6 and 6 facing at a predetermined interval and intermediate threads 7 coupling the woven fabrics at a suitable space, and a cover body 9 for covering the surface of the woven fabric cloth 8.

The woven fabric cloth 8 is a three-dimensional woven fabric composed by two woven fabrics 6 and 6 facing one another, and a large number of intermediate threads 7 coupling the woven fabrics 6 and 6 at a suitable space and distributively arranged on the entire surface of the woven fabric 6. The intermediate thread 7 is composed by warps or wefts of the woven fabric, or both warps and wefts. The intermediate thread 7 is woven at a density of 1 to 5 /cm², and preferably 2 to 3 /cm² almost uniformly on the entire surfaces of the woven fabrics 6 and 6. The intermediate thread 7 may be connected to the woven fabrics 6 and 6 by sewing together without being woven into the constitution of the woven fabrics 6 and 6.

Although the thickness between the woven fabrics 6 and 6 of the woven fabric cloth 8 is optional, the thickness is preferably 5 to 8 cm. Thus, the heat insulation property in the storage box 1 is improved, and the heat retaining property of the contained commodities such as foods is improved. Herein, the woven fabrics 6 and 6 and the intermediate thread 7 are preferably composed by the same kind of thread, and as the thread of the woven fabrics 6 and 6 and intermediate thread 7, threads composed by natural fibers or synthetic fibers such as cotton fibers, rayon fibers, nylon fibers, polyester fibers and polypropylene fibers is used.

The surface of the woven fabric cloth 8 is covered with a cover body 9. The cover body 9 is adhered to or welded to a surface material fixedly stuck to the surfaces of the woven fabrics 6 and 6 of the woven fabric cloth 8 . The surface material is made of a synthetic resin coated on or adhered to the surfaces of the woven fabrics 6 and 6. As the synthetic resin used for the surface material, a resin having gas impermeability such as a vinyl chloride resin, an olefin resin and a urethane resin can be used. Particularly, the urethane resin is preferable. As the urethane resin, polyurethane elastomer is preferable. The polyurethane elastomer is advantageously excellent in elastic modulus, load bearing capacity, mechanical strength, oil resistance, chemical resistance and abrasion resistance. Thus, polyurethane formed in a sheet shape may be pressurized and adhered on the woven fabrics 6 and 6 so as to apply a polyurethane layer to the woven fabrics 6 and 6 as the surface material.

As shown in FIG. 3, a seal member 11 is provided on a circumferential part 10 of the container main body 2. The seal member 11 is adhered to or welded to the surface material of the cover body 9. The seal member made of a synthetic resin sheet such as vinyl chloride tarpaulin is preferable. Such a synthetic resin sheet can be manufactured by covering the woven fabrics using elastic yarns or textiles using ordinary threads with resin. An internal space 12 is filled up with a foaming material such as urethane resin, and when the lid 3 is closed, the interior of the container main body 2 can be reliably sealed. Also, the circumferential part 10 of the side surface part made of the woven fabric cloth 8 is covered with an expandable synthetic resin sheet, and thereby the circumferential part 10 is expanded in semicircular shape without using the foaming material such as the urethane resin when the woven fabric is expanded by supplying the air. Accordingly, the container main body 2 can also be reliably sealed when the lid 3 is closed.

The foaming material or the like is also provided in the circumferential part 13 (see FIG. 1) of the lid 3, and thereby the inside sealability of the container main body 2 can be further improved when the container main body 2 is closed by the lid 3.

Thus, since the container main body 2 and the lid 3 are formed by the woven fabric cloth 8 including two woven fabrics 6 and 6 facing at a predetermined interval and a large number of intermediate threads 7 distributively arranged and coupling the woven fabrics at a suitable space, the container main body 2 and the lid 3 are expanded by introducing air into the woven fabric cloth 8. At this time, since the expansion is restrained by a large number of intermediate threads 7 distributively arranged, the rigidity of the container main body 2 and lid 3 is improved, and the container main body 2 and the lid 3 have sufficient strength even if loading such as stacking is performed at the time of transporting.

As described above, since the bottom surface part 4 and the side surface parts 5a, 5b, 5c and 5d are connected and the container main body 2 is integrally formed, the container main body 2 can be expanded and contracted by providing an intake/exhaust port 19 of air on any one surface of the side surface parts 5a, 5b, 5c and 5d or the bottom surface part 4. Thus, since the five surface of the bottom surface part 4 and the side surface parts 5a 5b, 5c and 5d are communicated with one another, the rigidity of the container main body 2 is improved by introducing the air into the container main body 2, and the container main body 2 can be made to obtain sufficient endurance even if the storage box is loaded. The injecting work of the air into the container main body 2 can also be easily performed.

As shown in FIGs . 1 and 2, the container main body 2 and the lid 3 are locked by a locking member 14 such as the synthetic resin sheet at one side. Sheet members 16a and 16b made of a synthetic resin or the like having a fastener 36 opened and closed are stuck on the other three sides, and thereby the lid 3 is easily opened and closed. The sheet member 16a stuck on the lid 3 side is preferably set so that the sheet member 16a is located at the side surface part 5 of the container main body 2 when the lid 3 is closed. Thereby, the lid 3 presses down the container main body 2, and the container main body 2 can be reliably sealed. A surface fastener can also be used as the fastener 36.

As shown in FIG. 1, a cold insulation sheet 17 such as an aluminum sheet is stuck on the inside of the container main body 2 and lid 3. Thereby, the cold insulation performance in the storage box 1 can be improved, and the storage box 1 can be used as a cold insulation box suitable for transporting commodities such as multi-item foods.

A storing member (not shown) capable of storing a heat insulator can be provided in the cold insulation sheet 17. A net-like bag body or the like can be used for the storing member. Thus, since the heat insulator can be stored, the heat retaining property in the storage box 1 can be improved.

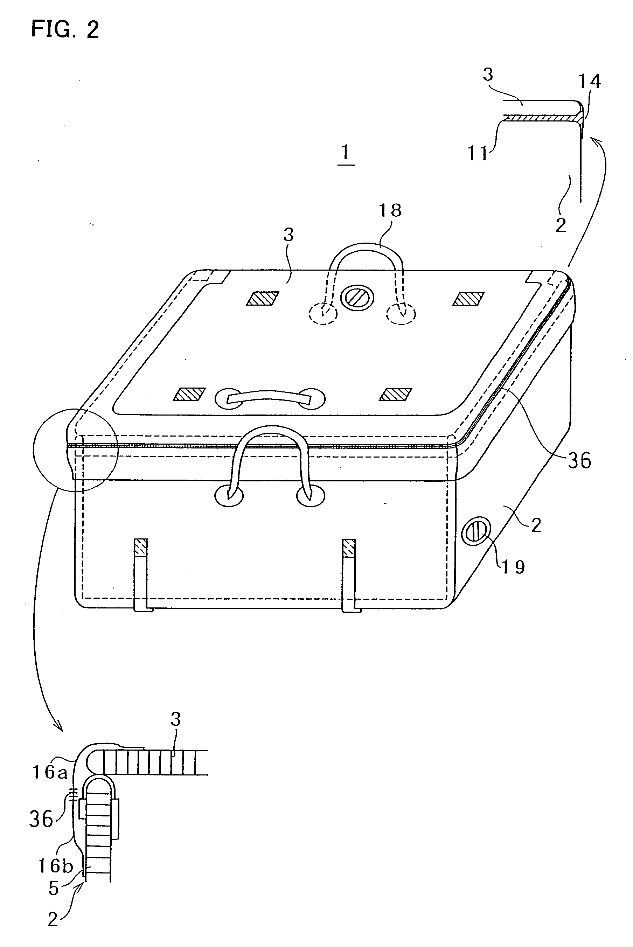

As shown in FIG. 2, a belt 18 is provided at the side surface part 5 of the container main body 2 of the storage box 1 so that the storage box 1 can be easily carried at the time of conveyance. A reinforcing sheet member or the like is stuck on each corner part of the bottom surface part. Therefore, damage or the like due to friction at the time of loading or the like can be prevented. A transporting tool such as a wheel can also be attached to each corner part. A proper method such as a method for sticking a wheel-attached board or the like using adhesives can be used as an attaching method. Thus, since the transporting tool such as wheels can also be attached, the storage box can be transported even if the weight of the storage box is heavy.

Since the container main body 2 can be constituted by supplying and discharging air, other than to use for transporting the commodities or the like as shown in the above embodiment, the container main body is produced in a larger size, and the container main body can be set and used at the required place when needed such as during the hot summer months. The container main body 2 can be folded and stored when the container main body 2 is not needed.

When a hole or the like is opened in the woven fabric cloth 8 according to the shapes of the commodities stored in the storage box 1, and the environment or the like where the storage box 1 is used, the woven fabric cloths 8 forming the surfaces may be uncommunicated with one another. In this case, even if the hole is opened in a part of the woven fabric cloth 8, the whole air in the woven fabric cloth 8 does not come out.

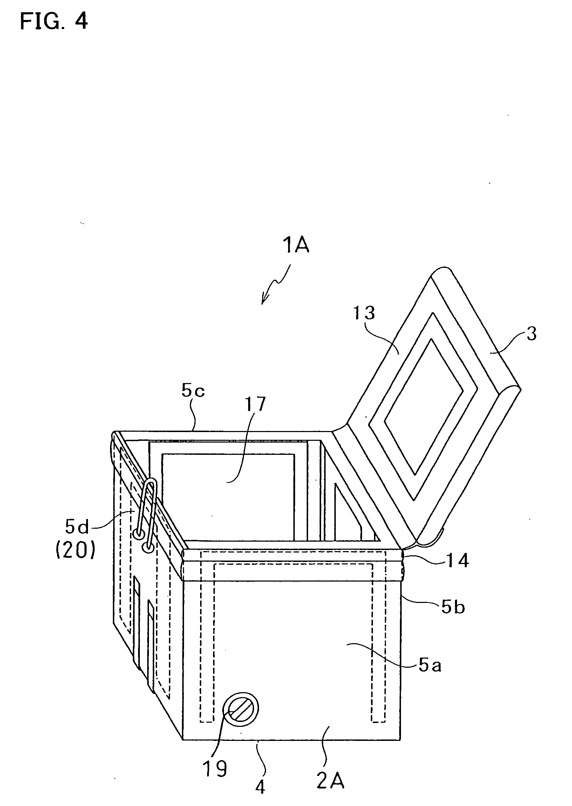

Next, the second embodiment of the present invention is described. Although the bottom surface part 4 and side surface parts 5 constituting the five surfaces of the container main body 2, and the lid 3 are all formed by the woven fabric cloth 8 in the storage box 1 of the first embodiment, at least three surfaces of the side surface parts of the container main body may be formed by the woven fabric cloth 8 so as to secure the shape retainability of the storage box. For example, as shown in FIG. 4, in the storage box 1A, one side surface part 5d of the container main body 2A may be formed by a plate member 20 other than the woven fabric cloth 8 such as a synthetic resin plate and a metal plate. Further, a lid can also be formed by the plate members 20 other than the woven fabric cloth 8.

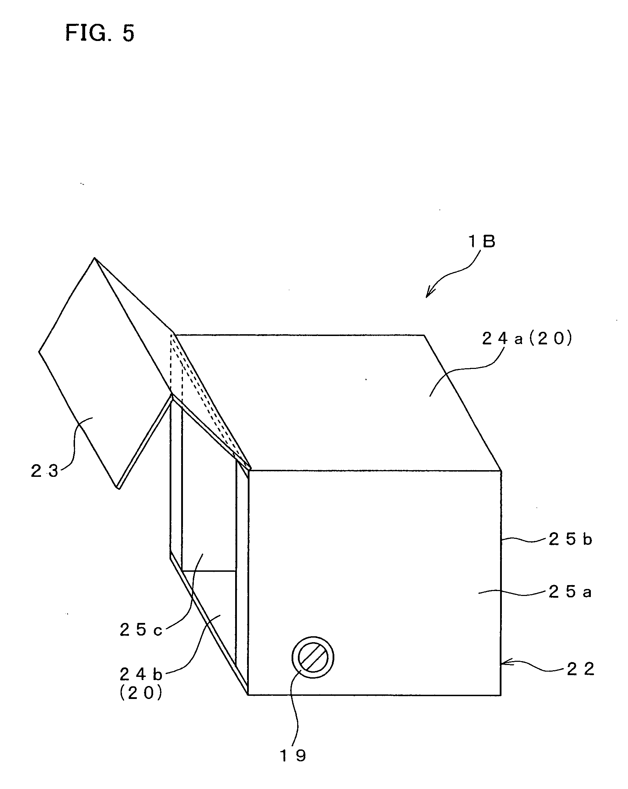

Next, the third embodiment of the present invention is described. Although the lid is provided at the upper surface side of the container main body in the above first embodiment, the lid does not always have to be provided at the upper surface side. For example, as shown in FIG. 5, in the storage box 1B, one side surface (left side surface in FIG. 5) of the container main body 22 is opened, and three side surface parts 25a, 25b and 25c of the container main body 22 are formed by the woven fabric cloth 8. In addition, the upper surface part 24a and bottom surface part 24b of the container main body 22 may be formed by the plate member 20. A lid 23 may be attached so that the opened side surface of the container main body 22 is covered.

Next, the fourth embodiment of the present invention is described. In a storage box 1C of the fourth embodiment, the entire surface of the container main body 32 and lid 33 having substantially the same constitution as the container main body 2 and lid 3 (see FIG. 1) of the first embodiment is covered with a cover member 34.

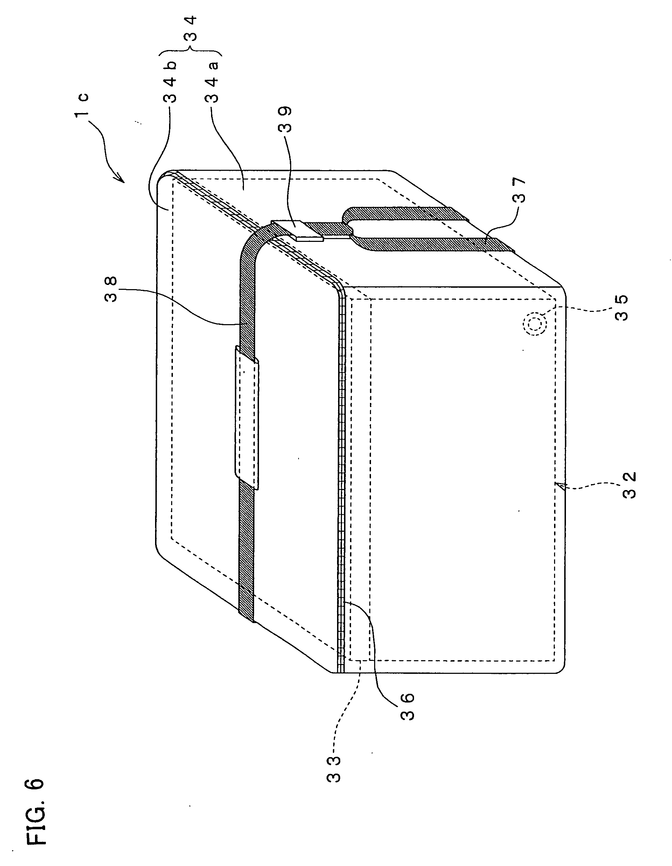

As shown in FIG. 6, the storage box 1C is provided with the container main body 32, the lid 33, and the cover member 34 for covering the entire surface of the container main body 32 and lid 33.

The container main body 32 and the lid 33 are formed by the woven fabric cloth 8 comprising two woven fabrics 6 facing at an interval and a large number of intermediate threads 7 distributively arranged and coupling the woven fabrics in the same manner as the container main body 2 and lid 3 of the first embodiment. The interior spaces of four side surface parts and bottom surface part of the container main body 32 are communicated with one another. A inlet 35 for injecting air into the woven fabric cloth 8 is formed on one side surface of the four side surface parts.

As shown in FIG. 6, the cover member 34 has a rectangular parallelepiped bag-like cover body part 34a capable of containing the container main body 32 and the lid 33, and a lid part 34b partially connected to the upper end of the cover body part 34a at one side. Herein, a cover member formed by for example, tarpaulin can be used as the cover member 34. A fastener 36 is provided on the other three sides of the cover body part 34a and lid part 34b, which are not connected, and the entire surface of the container main body 32 and lid 33 can be covered with the cover member 34 by closing the fastener 36 after the container main body 32 and the lid 33 are contained in the cover body part 34a. Thus, since the entire surface of the container main body 32 is covered with the cover member 34, the woven fabric cloth 8 forming the container main body 32 and the lid 33 is unexposed to the outside. The woven fabric cloth 8 is not damaged while transporting the commodities, and internal air does not leak.

As shown in FIG. 6, a belt 37 extending along two side surface parts facing one another is fixedly stuck to the bottom surface of the cover member 34, and further a carrier belt 38 whose length can be adjusted by a tag 39 is connected to the belt 37. The carrier belt 38 can be used in common for a handle and a shoulder belt. That is, when the length of the carrier belt 38 is shortened, the belt 38 can be used as the handle. Conversely, when the length is lengthened, the belt 38 can be used as the shoulder belt. At the time of discharging the air from the container main body 32 since the storage box 1 is not used for a while after conveying the commodities, if the air is discharged while pulling the carrier belt 38 upward, the side surface part is tightened by the carrier belt 38 and the air in the woven fabric cloth 8 is more quickly discharged. Thereby the folding work of the storage box 1 can be promptly performed.

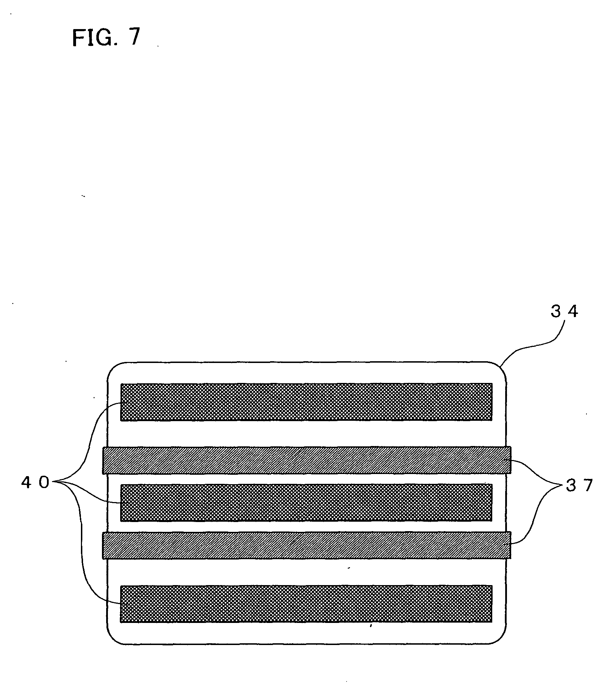

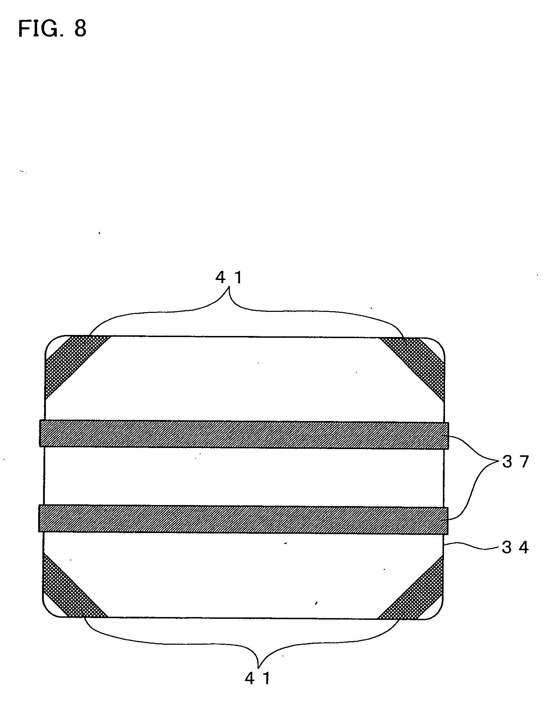

An abrasion resistant material for preventing abrasion of the bottom surface is provided on the bottom surface of the cover member 34. Therefore, the cover member 34 covering the bottom surface can be prevented from being damaged by abrasion, particularly at the time of transporting the heavy commodities. Herein, for example, an abrasion resistant material made of high-density polyethylene and PP (polypropylene) can be used. As shown in FIG. 7, a plurality of plate-like abrasion resistant materials 40 being long and thin may be arranged and adhered on the bottom surface of the cover member 34. As shown in FIG. 8, four abrasion resistant materials 41 may be respectively attached to the four corners of the bottom surface of the cover member 34 which is particularly easily abraded. The abrasion resistant material 40 (41) is attachably/detachably attached to the bottom surface of the cover member 34 using a surface fastener or the like. Thereby, even when the abrasion resistant material 40 (41) is abraded, the abrasion resistant material can be easily exchanged.

Since the entire surface of the container main body 2 of the storage box 1C is covered with the cover member 3, the woven fabric cloth 8 forming the side surface parts 2a to 2d of the container main body 2 is unexposed to the outside. The woven fabric cloth 8 is not damaged while being transported, and internal air does not leak. The heat retaining property and cold retaining property at the time of transporting the commodities requiring cold insulation or heat insulation are also improved by the cover member 3.

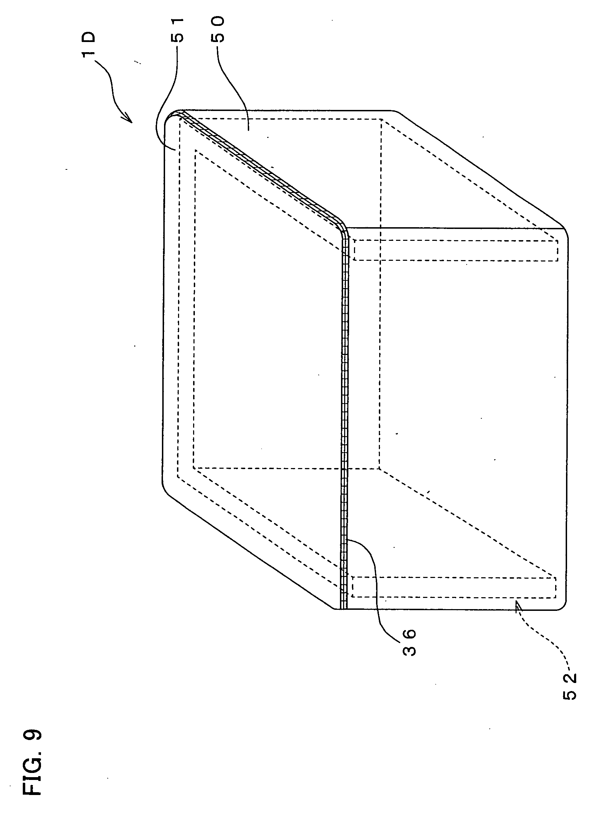

Next, the fifth embodiment of the present invention is described. As shown in FIG. 9, a storage box 1D of the fifth embodiment is provided with a sheet-shaped main body 50, a lid 51 and a woven fabric cloth 52 arranged inside the sheet-shaped main body 50 and lid 51 and forming three adjacent surfaces of the side surface parts of the storage box 1D.

The sheet-shaped main body 50 and the lid 51 are of the same kind as the cover member 34 (see FIG. 6) of the above fourth embodiment, and the lid 51 can be closed by the fastener 36. A woven fabric cloth 52 is a three-dimensional woven fabric composed by two woven fabrics facing one another, and a large number of intermediate threads coupling the woven fabrics at a suitable space and distributively arranged on the entire surface of the woven fabric cloth in the same manner as the above woven fabric cloth 8 (see FIG. 3). However, as shown in FIG. 9, the woven fabric cloth 52 of the fifth embodiment forms only the three adjacent surfaces of the side surface part. Thus, sufficient shape retainability of the storage box 1D can be secured by only forming the three adjacent surfaces of the storage box 1D using the woven fabric cloth.

The storage box of the present invention described above can be applied at the time of containing commodities other than the commodities such as foods requiring cold insulation or heat insulation. The present invention can be applied not only to a storage box loaded into a truck but also to a storage box loaded into other transportation means such as aircraft, a freight car or a vessel.

Further, the storage box of the present invention can be used by itself. In addition, the storage box can be loaded into an existing freight container and aircraft container or the like, and can be used at the time of performing cold insulation or heat insulation transportation or the like. Even in this case, the foldable storage box can be efficiently arranged in the container by effectively utilizing the feature of the foldable storage box of the present invention.

## Claims

1. A storage box comprising:
a container main body; and
a lid,
wherein at least three adjacent surfaces of side surface parts of the container main body are formed by a woven fabric cloth including two woven fabrics facing at an interval and a large number of intermediate threads distributively arranged and coupling the woven fabrics.

2. The storage box according to Claim 1, further comprising a cover member for covering the entire surface of the container main body and lid.

3. A storage box comprising:
a sheet-shaped container main body;
a lid; and
a woven fabric cloth including two woven fabrics facing at an interval and a large number of intermediate threads distributively arranged and coupling the woven fabrics, arranged inside of the sheet-shaped container main body and lid, and forming at least three adjacent surfaces of the side surface parts of the container main body.

4. The storage box according to any one of Claims 1 to 3, wherein at least three adjacent surfaces of the side surface . parts formed by the woven fabric cloth are communicated with one another.

5. The storage box according to any one of Claims 1 to 3, further comprising a seal member provided at the circumferential part of the woven fabric cloth.

6. The storage box according to any one of Claims 1 to 3, further comprising an attachably/detachably provided abrasion resistant material for preventing the abrasion of a bottom surface.
